# EUROPÄISCHE PATENTANMELDUNG

(11) **EP 4 436 013 A1**
(43) Veröffentlichungstag der Anmeldung: **25.09.2024**
(21) Anmeldenummer: 24162601.9
(22) Anmeldetag: 11.03.2024
(51) Int. Cl.: H02K 5/128

(54) **NASSLÄUFERMOTOR**

(30) Priorität: 21.03.2023 DE 102023107104
(71) Anmelder: Thomas Magnete GmbH, 57562 Herdorf (DE)
(72) Erfinder: Heidebrecht, Artur, 57520 Daaden (DE)

(57) **Zusammenfassung**

Die Erfindung betrifft einen Nassläufermotor (1) aufweisend einen Rotor (2), der um eine Rotationsachse (6) rotierbar ist, einen Stator (3), der bezüglich der Rotationsachse (6) radial außerhalb des Rotors (2) angeordnet ist, ein Spaltrohr (4), welches in einem Luftspalt (7) zwischen dem Stator (3) und dem Rotor (2) angeordnet ist und an dem Stator (3) anliegt, wobei das Spaltrohr (4) zumindest einen Endbereich (8) aufweist, welcher bezüglich der Rotationsachse (6) axial über den Stator (3) hervorsteht, und zumindest eine Stützhülse (5), welche jeweils an dem zumindest einen Endbereich (8) angeordnet ist und eingerichtet ist, zumindest einen Teil des Endbereichs (8) gegen Innendrücke im Spaltrohr (4) abzusichern.

## Beschreibung

### Gebiet der Erfindung

Die Erfindung betrifft einen Nassläufermotor.

Aktuelle Nassläufermotoren, wie beispielsweise aus DE 10 2013 109 522 B4 bekannt, weisen herkömmlicherweise einen um eine Rotationsachse rotierbaren Rotor, einen bezüglich der Rotationsachse radial außerhalb des Rotors angeordneten Stator und ein Spaltrohr auf. Ein solches Spaltrohr ist herkömmlicherweise in einem Luftspalt zwischen dem Stator und dem Rotor angeordnet. Dabei trennt das Spaltrohr den mit einem Fördermedium in Kontakt stehenden Rotor fluiddicht von dem Stator. Dafür liegt das Spaltrohr herkömmlicherweise an einer Innenumfangsfläche des Stators an.

Die Anforderungen an solche Spaltrohre sind im Allgemeinen sehr hoch. So muss das Spaltrohr bei bestimmten Anwendungen hohe Drücke von über 100 bar über einen langen Zeitraum widerstehen. Des Weiteren müssen solche Spaltrohre aus elektrisch schlecht oder nicht leitendem Material mit kleinen Wandstärken ausgeführt werden, da das Spaltrohr ansonsten den Magnetfluss zwischen Stator und Rotor negativ beeinflusst, was zu einer Reduzierung der Effizienz des Motors führt.

In einem Fall, in welchem ein Spaltrohr axial über den Stator hervorsteht, besteht außerdem das Problem, dass das Spaltrohr an den über den Stator hervorstehenden Bereichen nicht durch den Stator abgestützt werden kann, sodass diese hervorstehenden Bereiche nicht dauerhaft hohen Innendrücken widerstehen können. Dadurch ist die Lebensdauer des Nassläufermotors reduziert.

Es ist Aufgabe der Erfindung, einen Nassläufermotor bereitzustellen, welcher eine hohe Effizienz und Lebensdauer aufweist.

Die Lösung dieser Aufgabe erfolgt durch die Merkmale des unabhängigen Anspruchs. Die abhängigen Ansprüche haben vorteilhafte Ausgestaltungen der Erfindung zum Inhalt.

Die Lösung dieser Aufgabe erfolgt insbesondere durch einen Nassläufermotor gemäß Anspruch 1. Der Nassläufermotor weist einen Rotor, der um eine Rotationsachse rotierbar ist, und einen Stator auf, der bezüglich der Rotationsachse radial außerhalb des Rotors angeordnet ist. Des Weiteren weist der Nassläufermotor ein Spaltrohr auf, welches in einem Luftspalt zwischen dem Stator und dem Rotor angeordnet ist und insbesondere an dem Stator anliegt. Dabei weist das Spaltrohr zumindest einen Endbereich auf, welcher bezüglich der Rotationsachse axial über den Stator hervorsteht. Der Nassläufermotor weist zumindest eine Stützhülse auf, welche jeweils an dem zumindest einen Endbereich angeordnet ist und eingerichtet ist, zumindest einen Teil des Endbereichs gegen Innendrücke im Spaltrohr abzusichern.

Der Nassläufermotor wird im Betrieb mit einem Fluid, beispielsweise Öl, geflutet. Dabei wird insbesondere der Rotor mit dem Fluid geflutet. Das Spaltrohr trennt den Stator und den Rotor. Dabei schirmt das Spaltrohr den Stator vom Fluid ab, während der Rotor Kontakt zum Fluid hat bzw. mit dem Fluid geflutet ist.

Das Spaltrohr liegt, insbesondere durch die Innendrücke während eines Betriebs des Nassläufermotors, an dem Stator an. Das Spaltrohr kann im Ruhezustand des Nassläufermotors, in welchem keine bis geringe Innendrücke im Spaltrohr herrschen, von dem Stator radial beabstandet sein. Das Spaltrohr kann alternativ auch im Ruhezustand des Nassläufermotors an dem Stator anliegen. Während das Spaltrohr an dem Stator anliegt ist es vorteilhafterweise durch diesen abgestützt, sodass das Spaltrohr an seinen Bereichen, welche am Stator anliegen, durch den Stator gegen Innendrücke ausgehend vom Fluid abgestützt ist. Des Weiteren bewirkt das Spaltrohr, insbesondere in Zusammenwirkung mit der Stützhülse, dass der Stator vorteilhafterweise fixiert ist.

Dadurch, dass der Nassläufermotor die zumindest eine Stützhülse aufweist, kann das Spaltrohr außerdem an seinen Endbereichen gegen Innendrücke im Spaltrohr abgesichert werden, sodass die Lebensdauer des Nassläufermotors erhöht ist. Außerdem wird dadurch ermöglicht, eine Wandstärke des Spaltrohrs vorteilhafterweise zu verringern bzw. gering zu halten, sodass Magnetflüsse zwischen dem Rotor und dem Stator durch das Spaltrohr weniger negativ beeinflusst werden und damit die Effizienz des Nassläufermotors erhöht werden kann.

In einer vorteilhaften Ausgestaltung umschließt die Stützhülse einen Umfang des jeweiligen Endbereichs vollständig. Vorzugsweise ist die Stützhülse als Rohr ausgebildet. Dadurch ist eine besonders gute unterstützende Wirkung der Stützhülse gewährleistet.

In einer weiteren Ausführungsform umschließt die Stützhülse den Umfang des jeweiligen Endbereichs lediglich teilweise. Beispielsweise ist die Stützhülse dabei als Schlitzrohr mit länglichem Schlitz ausgebildet. Dadurch kann die Stützhülse besonders einfach auf das Spaltrohr aufgesetzt werden.

Vorteilhafterweise ist die Stützhülse an einer Außenumfangsfläche des jeweiligen Endbereichs des Spaltrohrs angeordnet. Dadurch stützt die Stützhülse den Endbereich gegen Innendrücke im Spaltrohr ab. Des Weiteren ist dadurch eine besonders einfache Montage gewährleistet.

In einer alternativen Ausgestaltung ist die Stützhülse an einer Innenumfangsfläche des jeweiligen Endbereichs angeordnet. Dadurch nimmt die Stützhülse die Innendrücke im Spaltrohr anstelle des Endbereichs des Spaltrohrs absichernd auf.

Vorteilhafterweise weist der Nassläufermotor eine Mehrzahl von Stützhülsen für den zumindest einen, insbesondere für jeden, Endbereich des Spaltrohrs auf. Dabei ist vorteilhafterweise eine erste Stützhülse an der Innenumfangsfläche und eine zweite Stützhülse an der Außenumfangsfläche des jeweiligen Endbereichs des Spaltrohrs angeordnet. Dadurch ist eine besonders gute Absicherung des Stützrohres gewährleistet.

Vorzugsweise weist die Stützhülse bezüglich der Rotationsachse ein unteres Ende auf. Dabei liegt das untere Ende der Stützhülse an einer Stirnfläche des Stators an. In einer besonders vorteilhaften Ausgestaltung liegt dabei das untere Ende der Stützhülse direkt an der Stirnfläche des Stators an. Vorteilhafterweise liegt dabei das untere Ende der Stützhülse luftdicht an der Stirnfläche des Stators an. Dadurch stellt die Stützhülse vorteilhafterweise eine durchgängige Abstützung des Spaltrohrs bereit.

Vorzugsweise weist die Stützhülse bezüglich der Rotationsachse ein oberes Ende auf, wobei das obere Ende eine Lippe aufweist, welche an einer Stirnfläche des Spaltrohrs anliegt. Vorzugsweise liegt die Lippe dabei direkt an der Stirnfläche des Spaltrohrs an. Besonders vorteilhaft ist es, wenn die Lippe luftdicht an der Stirnfläche des Spaltrohrs anliegt. Dadurch werden scharfe Kanten am Spaltrohr vermieden beziehungsweise durch die Lippe der Stützhülse bedeckt. Die Lippe stellt somit sicher, insbesondere während eines Montageprozesses, dass andere Komponenten wie etwa mögliche Dichtungen des Nassläufermotors durch eine scharfe Kante des Spaltrohrs nicht beschädigt werden und/oder dass das Spaltrohr während der Montage nicht beschädigt wird.

Vorteilhafterweise weist die Stützhülse einen Flansch an ihrem oberen Ende und/oder unteren Ende auf. Vorteilhafterweise kann dadurch eine toleranzausgleichende Wellenfeder an dem Flansch anliegen. Des Weiteren kann ein solcher Flansch einen flächigen Kontakt, beispielsweise mit dem Stator, bereitstellen, sodass eine besonders gute und fluiddichte Verbindung der Bauteile gewährleistet werden kann.

In einer vorteilhaften Ausführungsform weist die Stützhülse eine Einführfase auf. Dabei ist ein minimaler Innendurchmesser der Einführfase im Wesentlichen gleich oder geringer als ein Innendurchmesser des Spaltrohrs. Vorzugsweise ist dabei ein Innenumfang der Einführfase bündig mit einem Innenumfang des Spaltrohrs. Die Einführfase ist vorteilhafterweise am oberen Ende der Stützhülse gebildet. Die Einführfase bewirkt vorteilhafterweise eine einfache Montage des Nassläufermotors. Beispielsweise bewirkt die Einführfase bei der Montage, dass die Stützhülse, insbesondere zusammen mit dem Spaltrohr, beim Einführen leicht an einer Dichtung vorbeigeführt werden kann, ohne die Dichtung zu beschädigen.

Vorteilhafterweise ist ein Innendurchmesser des Stators im Wesentlichen gleich einem Innendurchmesser der Stützhülse. Dabei ist vorteilhafterweise ein Innenumfang des Stators bündig mit einem Innenumfang der Stützhülse. Dies erlaubt eine einfache Montage und sichere Verbindung zwischen den Bauteilen.

Bevorzugt weisen der Stator und die Stützhülse gleiche Toleranzen auf, sodass eine Kantwirkung vorteilhafterweise vermieden wird.

Hierbei und im Folgenden bedeutet "im Wesentlichen" insbesondere "im Rahmen von Fertigungstoleranzen" oder "im Rahmen der Passung". Dabei sind die vorgenannten Durchmesser vorteilhafterweise derart im Rahmen der Fertigungstoleranzen ausgestaltet, dass zwischen den Elementen, insbesondere zwischen der Stützhülse und dem Spaltrohr, eine Übergangspassung oder eine Spielpassung gebildet ist. Vorteilhafterweise, insbesondere bei Übergangspassung oder Spielpassung, bezeichnen die vorstehend und folgend erläuterten Durchmesser/Abmessungen einen eingebauten Zustand.

In einer vorteilhaften Ausführungsform sind die Stützhülse und das Spaltrohr derart ausgestaltet, dass sie eine Übergangspassung bilden. Dadurch ist eine besonders einfache Montage und sichere Halterung der Stützhülse und/oder des Spaltrohrs ermöglicht.

Vorteilhafterweise weist ein Außenumfang der Stützhülse entlang der Rotationsachse eine Verjüngung auf. Vorteilhafterweise ist dabei eine Wandstärke des oberen Endes der Stützhülse größer als eine Wandstärke des unteren Endes der Stützhülse. Dadurch ist eine besonders einfache Montage des Nassläufermotors ermöglicht. Beispielsweise können in einer Aussparung, welche durch die Verjüngung gebildet ist, weitere Komponenten wie etwa Teile von Spulen oder Elektronik aufgenommen sein.

In einer vorteilhaften Ausgestaltung weist die Stützhülse eine gleiche oder größere Wandstärke als das Spaltrohr auf. Dies gilt vorteilhafterweise auch für den verjüngten Bereich der Stützhülse. Dadurch ist eine besonders stabile Abstützung durch die Stützhülse ermöglicht, während eine Wandstärke des Spaltrohrs zur Steigerung der Effizienz des Nassläufermotors verringert werden kann.

Vorteilhafterweise weisen die Stützhülse und das Spaltrohr voneinander verschiedene Materialien auf. Dabei weist das Spaltrohr insbesondere faserverstärkten Kunststoff auf oder ist aus diesem gebildet. Der faserverstärkte Kunststoff ist vorzugsweise kohlefaserverstärkter Kunststoff (CFK) und/oder glasfaserverstärkter Kunststoff (GFK). Die Stützhülse weist insbesondere ein Metall auf oder ist aus Metall gebildet.

Vorteilhafterweise sind die Stützhülse und das Spaltrohr separate Elemente. Dabei werden die Stützhülse und das Spaltrohr vorteilhafterweise ineinander geschoben und insbesondere durch ihre Passung, vorzugsweise Übergangspassung, zumindest temporär zusammengehalten.

Vorteilhafterweise sind die Stützhülse und das Spaltrohr einteilig. Dabei werden die Stützhülse und das Spaltrohr vorteilhafterweise fest miteinander verbunden, beispielsweise verklebt oder verschweißt. Dabei werden die Stützhülse und das Spaltrohr vorteilhafterweise mediendicht miteinander verbunden. insbesondere werden dabei das Spaltrohr und die mögliche Stützhülse an der Innenumfangsfläche des Endbereichs des Spaltrohrs miteinander verklebt oder verschweißt. Dies hat den Vorteil, dass das Medium im Spaltrohr nicht zwischen Spaltrohr und Stützhülse gelangen kann.

In einer alternativen Ausgestaltung sind die Stützhülse und das Spaltrohr einstückig. Dabei ist die Stützhülse vorteilhafterweise als ein Bereich des Spaltrohrs, insbesondere der Endbereiche des Spaltrohrs, mit einer größeren Wandstärke als die übrigen Bereiche des Spaltrohrs ausgebildet. In einem beispielhaften Fall, in welchem die Stützhülse und das Spaltrohr einstückig aus faserverstärktem Kunststoff gebildet sind, wird die Stützhülse durch eine größere Kunststoff-Matrix und/oder eine höhere Anzahl an Fasern und/oder durch eine höhere Anzahl an Faserwicklungen an den entsprechenden Bereichen des Spaltrohrs gebildet.

Die Erfindung betrifft außerdem die Stützhülse gemäß einem der vorstehenden besonderen Ausgestaltungen.

Die Erfindung betrifft außerdem das Spaltrohr gemäß einem der vorstehenden besonderen Ausgestaltungen zusammen mit der Stützhülse gemäß einem der vorstehenden besonderen Ausgestaltungen.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine schematische Querschnittsansicht eines Nassläufermotors gemäß einer Ausführungsform der vorliegenden Erfindung; und
- Fig. 2: eine perspektivische Schnittansicht des Nassläufermotors gemäß der Ausführungsform der vorliegenden Erfindung.

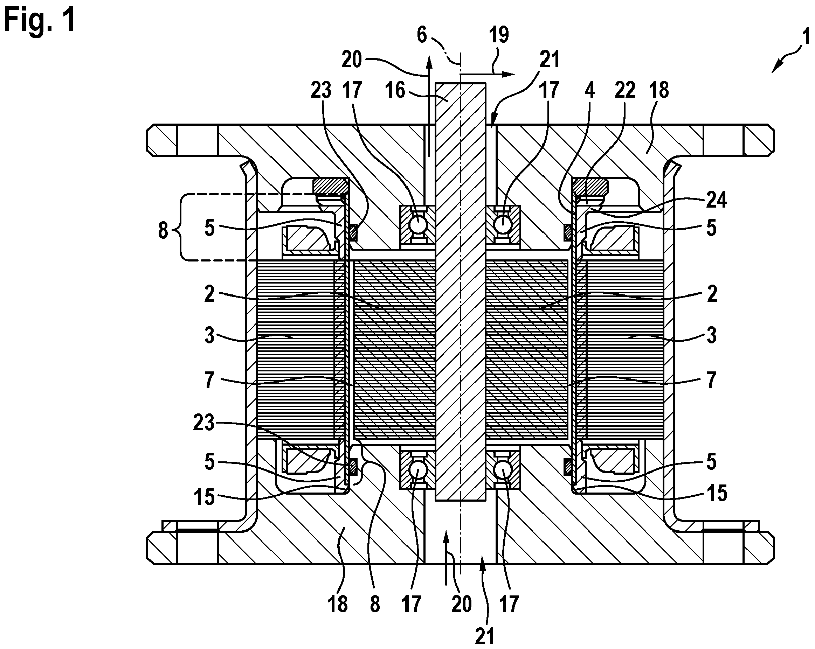

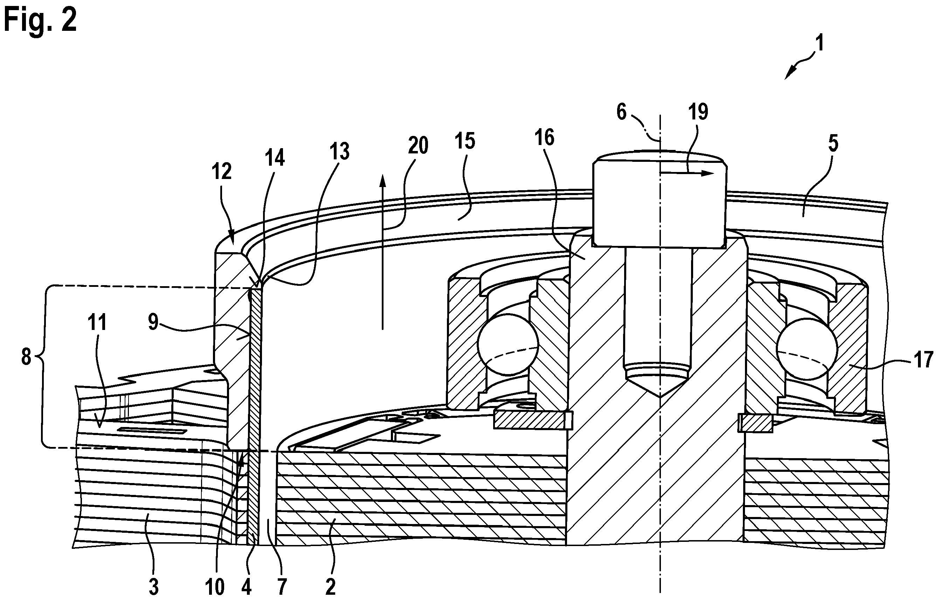

Fig. 1 zeigt eine schematische Querschnittsansicht eines Nassläufermotors 1 gemäß einer Ausführungsform der vorliegenden Erfindung. Fig. 2 zeigt eine perspektivische Schnittansicht des Nassläufermotors 1 gemäß der Ausführungsform der vorliegenden Erfindung.

Bei dem Nassläufermotor 1 gemäß der vorliegenden Ausführungsform handelt es sich insbesondere um eine Fluidpumpe, vorteilhafterweise eine Ölpumpe. Dabei wird der Nassläufermotor 1 mit einem Fluid 20, hier ein Fördermedium (beispielsweise Öl) des Nassläufermotors 1, geflutet. Dabei wird insbesondere ein Rotor 2 (nachstehend erläutert) des Nassläufermotors 1 mit dem Fluid 20 geflutet.

Wie aus der Fig. 1 ersichtlich weist der Nassläufermotor 1 einen Rotor 2 auf, der um eine Rotationsachse 6 rotierbar ist. Der Nassläufermotor 1 weist außerdem einen Stator 3 auf, der bezüglich der Rotationsachse 6 radial außerhalb des Rotors 2 angeordnet ist. In der vorliegenden Ausführungsform sind der Stator 3 und der Rotor 2 aus Lamellenblechen aus gestanztem Elektroblech, welche als Lamellenpakete gestapelt sind, ausgebildet. Alternativ können der Stator 3 und/oder der Rotor 2 aus Vollmaterial monolithisch aufgebaut sein.

Der Rotor 2 ist mit einer Welle 16 verbunden. Die Welle 16 ist über Lager 17 an Gehäuseelementen 18 des Nassläufermotors 1 gelagert. Der Nassläufermotor 1 weist außerdem ein Spaltrohr 4 auf, welches in einem Luftspalt 7 zwischen dem Stator 3 und dem Rotor 2 angeordnet ist. Die Gehäuseelemente 18 weisen jeweils Öffnungen 21 für das Fluid 20 auf.

Das Spaltrohr 4 liegt insbesondere während eines Betriebes des Nassläufermotors 1 an dem Stator 3 an. Dabei liegt das Spaltrohr 4 an einem Innenumfang des Stators 3 an. Das Spaltrohr 4 trennt fluiddicht den Rotor 2 und den Stator 3. Dadurch schirmt das Spaltrohr 4 den Stator 3 von dem Fluid 20 ab. Des Weiteren weist der Nassläufermotor 1 zwischen dem Spaltrohr 4 und den Gehäuseelementen 18 Dichtungen 23 auf, welche die Gehäuseelemente 18 abdichten.

Das Spaltrohr 4 weist vorliegend zwei Endbereiche 8 auf, welche bezüglich der Rotationsachse 6 axial über den Stator 3 hervorstehen. Dabei ragt das Spaltrohr 4 bezüglich der Rotationsachse 6 axial über den Stator 3 mit beiden seiner Enden, d.h. in Fig. 1 oben und unten, sodass das Spaltrohr 4 in der vorliegenden Ausführungsform zwei Endbereiche 8 aufweist.

Das Fluid 20, welches den Rotor 2 umgibt, übt üblicherweise hohe Innendrücke entlang einer Radialrichtung 19 auf das Spaltrohr 4 auf. In einem Fall, in welchem das Spaltrohr 4 in einem Ruhezustand des Nassläufermotors 1 radial leicht von dem Stator 3 beabstandet ist, wird das Spaltrohr 4 durch die Innendrücke vorteilhafterweise radial gegen den Stator 3 gedrückt. Das Spaltrohr 4 kann allerdings auch bereits im Ruhezustand des Nassläufermotors 1, in welchem keine bis geringe Innendrücke herrschen, an dem Stator 3 anliegen. In beiden vorteilhaften Fällen ist das Spaltrohr 4 in Bereichen entlang der Rotationsachse 6, in welchen der Stator 3 vorhanden ist, durch den Stator 3 abgestützt.

Der Nassläufermotor 1 weist außerdem zumindest eine Stützhülse 5 auf, welche jeweils an dem zumindest einen Endbereich 8 angeordnet ist und eingerichtet ist, den Endbereich 8 gegen die Innendrücke im Spaltrohr 4 abzusichern. Die Stützhülse 5 wird insbesondere mit Bezug auf Fig. 2 näher erläutert.

In der vorliegenden Ausführungsform ist die Stützhülse 5 mit einer Übergangspassung an einer gesamten Außenumfangsfläche 9 des Endbereichs 8 des Spaltrohrs 4 angeordnet. Die Stützhülse 5 weist dabei ein unteres Ende 10 auf, welches an einer Stirnfläche 11 des Stators 3 anliegt. Hierbei liegt das untere Ende 10 der Stützhülse 5 direkt, insbesondere luftdicht, an der Stirnfläche 11 des Stators 3 an.

Die Stützhülse 5 weist außerdem ein oberes Ende 12 auf, welches weiter eine Lippe 13 aufweist, die an einer oberen Stirnfläche 14 des Spaltrohrs 4 anliegt. Die Lippe 13 liegt dabei insbesondere direkt an der Stirnfläche 14 des Spaltrohrs 4 an. Dabei ist die Lippe 13 ein Teil einer Einführfase 15 der Stützhülse 5. Ein minimaler Innendurchmesser der Einführfase 15, d.h. an der Stelle der Lippe 13, ist in der vorliegenden Ausführungsform im Wesentlichen gleich einem Innendurchmesser des Spaltrohrs 4. Mit anderen Worten ist die Lippe 13 bündig mit dem Spaltrohr 4. Die Einführfase 15 der Stützhülse 5 erlaubt ein einfaches Einführen der Dichtungen 23 (siehe Fig. 1).

Werden als erstes die Dichtungen 23 in die Gehäuseelemente 18 gelegt und dann das Spaltrohr 4 zusammen mit der Stützhülse 5 in das Gehäuseelement 18 eingeführt, so bewirkt die Einführfase 15 der Stützhülse 5, dass diese an den Dichtungen 23 vorbeigleiten können, ohne die Dichtungen 23 dabei zu beschädigen.

Zwischen den Gehäuseelementen 18, insbesondere zwischen dem in Fig. 1 dargestellten oberen Gehäuseelement 18, und der Stützhülse 5 ist außerdem eine Feder 22 angeordnet. Dabei weist die Stützhülse 5 vorteilhafterweise einen Flansch 24 auf, an welchem die Feder 22 anliegt. Die Feder 22 ist beispielsweise eine Wellenfeder. Die Feder 22 bewirkt einen Ausgleich von Toleranzen zwischen den Elementen des Nassläufermotors 1. Des Weiteren bewirken die Feder 22, die Stützhülse 5 und das Spaltrohr 4 zusammen eine zusätzliche Fixierung des Stators 3.

Wie außerdem aus Fig. 2 ersichtlich, ist ein Innendurchmesser des Stators 3 im Wesentlichen gleich einem Innendurchmesser der Stützhülse 5. Mit anderen Worten sind hierbei der Stator 3 und die Stützhülse 5 bündig.

Die Stützhülse 5 weist entlang der Rotationsachse 6 von ihrem oberen Ende 12 zu ihrem unteren Ende 10 einen sich in radialer Richtung 19 verjüngenden Aufbau auf. Dabei weist die Stützhülse 5 durchgängig, insbesondere auch in dem verjüngten Bereich, eine größere Wandstärke als das Spaltrohr 4 auf.

In der vorliegenden Ausführungsform ist das Spaltrohr 4 aus einem faserverstärkten Kunststoff gebildet. Dabei ist das Spaltrohr 4 bevorzugt aus kohlenstofffaserverstärktem Kunststoff (CFK) und/oder aus glasfaserverstärktem Kunststoff (GFK) gebildet. Die Stützhülse 5 ist hierbei aus Metall gebildet.

In der vorliegenden Ausführungsform sind das Spaltrohr 4 und die Stützhülse 5 als separate Elemente ausgebildet. Alternativ können diese jedoch einteilig gebildet sein, beispielsweise durch Verkleben und/oder Verschweißen dieser. Weiter alternativ können diese einstückig gebildet sein. Dabei ist beispielsweise die Stützhülse 5 ebenfalls aus CFK oder GFK und als Endbereich 8 des Spaltrohrs 4 gebildet.

Neben der vorstehenden schriftlichen Beschreibung der Erfindung wird zu deren ergänzender Offenbarung hiermit explizit auf die zeichnerische Darstellung der Erfindung in den Figuren Bezug genommen.

### Bezugszeichenliste

- 1: Nassläufermotor
- 2: Rotor
- 3: Stator
- 4: Spaltrohr
- 5: Stützhülse
- 6: Rotationsachse
- 7: Luftspalt
- 8: Endbereich
- 9: Außenumfangsfläche
- 10: unteres Ende
- 11: Stirnfläche
- 12: oberes Ende
- 13: Lippe
- 14: Stirnfläche
- 15: Einführfase
- 16: Welle
- 17: Lager
- 18: Gehäuseelement
- 19: Radialrichtung
- 20: Fluid
- 21: Öffnung
- 22: Feder
- 23: Dichtung
- 24: Flansch

## Patentansprüche

1. Nassläufermotor (1); aufweisend:
einen Rotor (2), der um eine Rotationsachse (6) rotierbar ist;
einen Stator (3), der bezüglich der Rotationsachse (6) radial außerhalb des Rotors (2) angeordnet ist;
ein Spaltrohr (4), welches in einem Luftspalt (7) zwischen dem Stator (3) und dem Rotor (2) angeordnet ist und insbesondere an dem Stator (3) anliegt, wobei das Spaltrohr (4) zumindest einen Endbereich (8) aufweist, welcher bezüglich der Rotationsachse (6) axial über den Stator (3) hervorsteht; und
zumindest eine Stützhülse (5), welche jeweils an dem zumindest einen Endbereich (8) angeordnet ist und eingerichtet ist, zumindest einen Teil des Endbereichs (8) gegen Innendrücke im Spaltrohr (4) abzusichern.

2. Nassläufermotor (1) gemäß Anspruch 1, wobei die Stützhülse (5) einen Umfang des jeweiligen Endbereichs (8) vollständig umschließt.

3. Nassläufermotor (1) gemäß einem der vorherigen Ansprüche, wobei die Stützhülse (5) an einer Außenumfangsfläche (9) des jeweiligen Endbereichs (8) angeordnet ist.

4. Nassläufermotor (1) gemäß einem der vorherigen Ansprüche, wobei die Stützhülse (5) bezüglich der Rotationsachse (6) ein unteres Ende (10) aufweist, wobei das untere Ende (10) der Stützhülse (5) an einer Stirnfläche (11) des Stators (3) anliegt, insbesondere direkt anliegt.

5. Nassläufermotor (1) gemäß einem der vorherigen Ansprüche, wobei die Stützhülse (5) bezüglich der Rotationsachse (6) ein oberes Ende (12) aufweist, wobei das obere Ende (12) eine Lippe (13) aufweist, welche an einer Stirnfläche (14) des Spaltrohrs (4) anliegt.

6. Nassläufermotor (1) gemäß einem der vorherigen Ansprüche, wobei die Stützhülse (5) eine Einführfase (15) aufweist, wobei ein minimaler Innendurchmesser der Einführfase (15) im Wesentlichen gleich oder geringer als ein Innendurchmesser des Spaltrohrs (4) ist.

7. Nassläufermotor (1) gemäß einem der vorherigen Ansprüche, wobei ein Innendurchmesser des Stators (3) im Wesentlichen gleich einem Innendurchmesser der Stützhülse (5) ist.

8. Nassläufermotor (1) gemäß einem der vorherigen Ansprüche, wobei die Stützhülse (5) eine gleich oder größere Wandstärke als das Spaltrohr (4) aufweist.

9. Nassläufermotor (1) gemäß einem der vorherigen Ansprüche, wobei die Stützhülse (5) und das Spaltrohr (4) voneinander verschiedene Materialien aufweisen, wobei das Spaltrohr (4) insbesondere faserverstärkten Kunststoff aufweist und wobei die Stützhülse (5) insbesondere ein Metall aufweist.

10. Nassläufermotor (1) gemäß einem der vorherigen Ansprüche, wobei die Stützhülse (5) und das Spaltrohr (4) einstückig sind oder separate Elemente sind.
